# EUROPÄISCHE PATENTANMELDUNG

(11) **EP 2 184 306 A1**
(43) Veröffentlichungstag der Anmeldung: **12.05.2010**
(21) Anmeldenummer: 09013453.7
(22) Anmeldetag: 24.10.2009
(51) Int. Cl.: C08G 18/40, C08G 18/42, C08G 18/48, C08G 18/50, C08G 18/76, C08J 9/00, C08J 9/12, C08J 9/14, C08K 3/32, C08K 5/00, C08G 18/09, C08G 18/79

(54) **PIR-Hartschaumstoffe, ein Verfahren zu deren Herstellung und deren Verwendung**

(30) Priorität: 07.11.2008 EP 08019496
(71) Anmelder: Bayer MaterialScience AG, 51368 Leverkusen (DE)
(72) Erfinder: van der Wal, Allard, 8475 EK Nijholtpade (NL); Haak, Marcel B., 9919 AV Loppersum (NL)

(57) **Zusammenfassung**

Die vorliegende Erfindung betrifft PIR-Hartschaumstoffe, ein Verfahren zur Herstellung dieser PIR-Hartschaumstoffe durch Vergießen und deren Verwendung.

## Beschreibung

Die vorliegende Erfindung betrifft PIR-Hartschaumstoffe, ein Verfahren zur Herstellung dieser PIR-Hartschaumstoffe durch Vergießen und deren Verwendung.

EP-A 1219653 offenbart PIR-Hartschaumstoffe mit verbesserter Flammwidrigkeit und niedriger Wärmeleitfähigkeit auf Basis aromatischer Polyesterpolyole. Daneben wird auch der Einsatz aliphatischer, cycloaliphatischer oder heterocyclischer Polyesterpolyole vorgeschlagen.

US 6,495,722 beschreibt für die Herstellung von rein Wasser getriebenen Systemen die Verwendung von auf Mannichbase basierten Polyolen, da nur durch die Verwendung derartiger Polyole eine gute Flammwidrigkeit und Dimensionsstabilität ermöglicht werden kann. Ein großer Nachteil derartiger Mannichbase basierten Polyole ist die hohe Viskosität und die damit verbundenen Verarbeitbarkeit als Sprühschaumsystem. Aufgrund der hohen Viskosität entstehen leicht Vermischungsstörungen und somit Schäume mit schlechten mechanisch-physikalischen Eigenschaften.

Die bekannten PIR-Hartschaumstoffe haben ein schlechtes Fließverhalten, sind extrem spröde und/oder weisen eine geringe Adhäsion zum Substrat auf.

Zurzeit werden nur PIR-Blockschäume für Biertankisolierungen verwendet. Diese Blockschäume sind nicht vollständig wasserdampfundurchlässig. Daher treten häufig Kondensationsprobleme auf.

Aufgabe war es, PIR-Hartschaumstoffe zur Verfügung zu stellen, die gut fließfähig sind, damit sie im Gießverfahren eingesetzt werden können, und nicht spröde sind. Sie sollten gut am Substrat, auf das sie aufgebracht werden, haften, und sie sollten wasserdampfundurchlässig sein, damit keine Kondensationsprobleme auftreten.

Es wurde nun gefunden dass sich bei Verwendung einer speziellen Kombination aus Polyolen, Katalysatoren und Treibmitteln im richtigen Mischungsverhältnis PIR-Hartschaumstoffe mit niedriger Wärmeleitfähigkeit, verringerter Sprödigkeit, mit sehr guter Dimensionsstabilität und verbesserter Oberflächenhaftung und Oberflächenqualität herstellen lassen, die im Gießverfahren vor Ort eingesetzt werden können.

Gegenstand der Erfindung sind PIR-Hartschaumstoffe erhältlich durch Umsetzung einer organischen Polyisocyanatkomponente mit einer gegenüber Isocyanatgruppen reaktive Wasserstoffatome enthaltenden Polyolkomponente bei einem Index (das molare Verhältnis der Isocyanatgruppen zu den gegenüber Isocyanatgruppen reaktiven Wasserstoffatomen multipliziert mit 100) von 100 bis 400, besonders bevorzugt 185 bis 250, in Gegenwart geeigneter Hilfs- und Zusatzstoffe, Treibmitteln und Wasser sowie Katalysatoren, wobei die Polyolkomponente mindestens ein Polyesterpolyol und ein Polyetherpolyol enthält und wobei das Volumenverhältnis der Polyolkomponente zur organischen Polyisocyanatkomponente 100 zu 100 bis 100 zu 110 beträgt.

Für die Herstellung von PIR-Hartschaumstoffen werden als organische Polyisocyanatkomponente Mischungen aus Isomeren des Diphenylmethandiisocyanat (MDI) und dessen Oligomeren eingesetzt. Solche Mischungen werden allgemein als "polymeres MDI" (pMDI) bezeichnet. Der NCO-Gehalt liegt vorzugsweise bei 28 bis 32 Gew.-%. Darüber hinaus ist die Verwendung von geeigneten NCO-Prepolymeren als organische Polyisocyanatkomponente, hergestellt aus der Umsetzung von polymerem MDI mit aliphatischen oder aromatischen Polyetherpolyolen oder Polyesterpolyolen, beispielsweise 1 bis 4 Hydroxylgruppen aufweisenden Polyetherpolyolen oder Polyesterpolyolen mit einem zahlenmittleren Molekulargewicht von 60 bis 4000 ebenfalls möglich.

Das Gemisch aus Polyolkomponente, Treibmitteln, Katalysatoren, Flammschutzmitteln, Stabilisatoren und sonstigen Hilfs- und Zusatzmitteln wird im Folgenden als Komponente A bezeichnet.

Die Polyolkomponente enthält mindestens ein Polyesterpolyol und ein Polyetherpolyol. Zusätzlich können auch noch Mannichbase-Polyole in der Polyolkomponente eingesetzt werden.

Bevorzugt sind diese Mannichbase-Polyole aus Bisphenol A, Phenol oder Nonylphenol als Starter sowie Formaldehyd und Diethanolamin mit anschließender Propoxylierung und/oder Ethoxylierung herstellbar. Sie weisen vorzugsweise OH-Zahlen zwischen 350 und 700 mg KOH/g und Funktionalitäten von 2,5 bis 5 auf. Sie sind bevorzugt in einer Menge von 0 bis 20 Gew.-%, bezogen auf die Komponente A, enthalten.

Bei den Polyesterpolyolen handelt es sich vorzugsweise um aromatische Polyesterpolyole, bevorzugt auf Basis von Phthalsäure oder Phthalsäureanhydrid mit z.B. Diethylenglykol, rezykliertes Polyethylenterephthalat oder rezykliertes Dimethylterephthalat (z.B. mit Diethylenglykol umgeestert). Die Polyesterpolyole weisen vorzugsweise OH-Zahlen von 150 bis 350 und Funktionalitäten von 2 bis 2,5 auf und liegen vorzugsweise in einer Menge von 15 bis 35 Gew.-%, bezogen auf Komponente A, vor.

Bei den Polyetherpolyolen handelt es sich vorzugsweise um solche auf Basis von Propylenoxid und/oder Ethylenoxid mit Sorbitol oder Sucrose und gegebenenfalls anderen Diolen oder Polyolen (z.B. Glycerol, Monopropylenglykol oder H₂O) als Starter. Sie weisen bevorzugt OH-Zahlen von 400 bis 600 und Funktionalitäten von 3,5 bis 6 auf und werden vorzugsweise in Mengen von 5 bis 30 Gew.-%, bezogen auf Komponente A, eingesetzt.

Eine besonders bevorzugte Polyolkomponente enthält ein Polyesterpolyol mit einer OH-Zahl von 220 bis 260 mg KOH/g und einer Viskosität von 1500 bis 2500 mPas bei 25°C und einer Funktionalität von 2 bis 2,5 auf Basis von Polyethylenterephthalat und ein Polyetherpolyol mit einer OH-Zahl von 450 bis 500 mg KOH/g und einer Funktionalität von 5 bis 6 basierend auf Propylenoxid mit Sorbitol und 1,2-Propylenglykol als Starter.

Der Polyolkomponente werden in der Regel Flammschutzmittel zugesetzt, besonders bevorzugt in einer Menge von 5 bis 35 Gew.-%, bezogen auf die Komponente A). Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise brom- und chlorhaltige Paraffine oder Phosphorverbindungen, wie zum Beispiel die Ester der Orthophosphorsäure und der Metaphosphorsäure, die ebenfalls Halogen enthalten können, sein. Beispiele sind Triethylphosphat, Diethylethanphosphonat, Kresyldiphenylphosphat, Dimethylpropanphosphonat und Tris(β-chlorisopropyl)phosphat. Bevorzugt werden bei Raumtemperatur flüssige Flammschutzmittel gewählt.

Eingesetzt wird soviel Treibmittel und Wasser als Co-Treibmittel, wie zur Erzielung einer dimensionsstabilen Schaummatrix und gewünschten Rohdichte nötig ist. In der Regel sind dies zwischen 0,2 und 1,5 Gew.-% an Co-Treibmittel und zwischen 0,5 und 20 Gew.-% an Treibmittel, jeweils bezogen auf Komponente A.

Als Treibmittel werden vorzugsweise Kohlenwasserstoffe, z.B. die Isomeren des Pentans, oder Fluorkohlenwasserstoffe, z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden. So lassen sich z.B. mit Mischungen von n- oder i-Pentan mit HFC 245fa im Verhältnis 75:25 (n-/i-Pentan:HFC 245fa) Wärmeleitfähigkeiten, gemessen bei 10°C, von weniger als 20 mW/mK erzielen.

Der Polyolkomponente werden in der Polyurethanchemie übliche Katalysatoren zugesetzt. Die zur Herstellung eines PIR-Hartschaumstoffes nötigen aminischen Katalysatoren (bevorzugt in Mengen von 0,05 bis 3 Gew.-%, bezogen auf die Komponente A) sowie die als Trimerisationskatalysatoren eingesetzten Salze (bevorzugt in Mengen von 0,1 bis 5 Gew.%, bezogen auf die Komponente A) werden in solcher Menge eingesetzt, dass der PIR-Schaum z.B. für Isolationen an Rohren, Wänden, Dächern sowie Tanks (beispielsweise Biertanks) mit hinreichender Aushärtezeit eingesetzt werden kann.

Beispiele für derartige Katalysatoren sind: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriazin, Tetramethylammoniumhydroxid, Natriumacetat, Natriumoctoat, Kaliumacetat, Kaliumoctoat, Natriumhydroxid oder Gemische dieser Katalysatoren.

Als Schaumstabilisatoren, die ebenfalls der Polyolkomponente zugesetzt werden können, kommen vor allem Polyethersiloxane in Frage. Diese Verbindungen sind im Allgemeinen so aufgebaut, dass ein Copolymerisat aus Ethylenoxid und Propylenoxid mit einem Polydimethylsiloxanrest verbunden ist. Bevorzugt werden diese Stabilisatoren in Mengen von 0,5 bis 2,5 Gew.-%, bezogen auf Komponente A eingesetzt.

Zur Beeinflussung des Lambdaalterungsverhaltens, zur Verbesserung des Flammverhaltens und weiterer mechanischer Eigenschaften können der Polyolkomponente feste Additive, wie z.B. Nanoteilchen, Kalk, Mineralien, Pigmente, Graphit, zugesetzt werden. Weitere Beispiele von gegebenenfalls in der erfindungsgemäßen Polyolformulierung mitzuverwendenden festen Additiven sind literaturbekannt. Die Mengen liegen im Bereich von 0 bis 30 Gew.-%, bezogen auf Komponente A.

Es können auch Härtungsmittel mit verwendet werden, wie z.B. Polyole mit OH-Zahlen von 800 bis 2000 und Funktionalitäten von 2 bis 3. Dies sind z.B. Monoethylenglykol, Monopropylenglykol und Glycerol. Sie liegen bevorzugt in Mengen von 0 bis 5 Gew.-%, bezogen auf Komponente A vor.

Die Herstellung der erfindungsgemäßen PIR-Hartschaumstoffe erfolgt nach dem dem Fachmann bekannten Einstufenverfahren, bei dem die Reaktionskomponenten kontinuierlich oder diskontinuierlich miteinander zur Reaktion gebracht werden und dann in bzw. auf geeignete Formen/Substrate zur Aushärtung gebracht werden. Beispiele sind in US-A 2 764 565, in G. Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Die erfindungsgemäßen PIR-Hartschäume können vielseitig als Isoliermaterial eingesetzt werden. Beispiele aus dem Bauwesen sind Wandisolationen, Rohrschalen bzw. Rohrhalbschalen, Dachisolierungen, Wandelemente und Fußbodenplatten. Sie können insbesondere zur Isolierung von Behältern und Tanks, insbesondere Biertanks eingesetzt werden.

Gegenstand der Erfindung sind auch die erfindungsgemäßen PIR-Hartschäume enthaltende Behälter/Behälterwände, insbesondere Biertanks. Diese weisen Wände aus einem Kern aus erfindungsgemäßem PIR-Hartschaum und mit diesem fest verbundene Deckschichten auf. Die Deckschichten können flexibel oder starr sein. Beispiele sind Papierdeckschichten, Vliesdeckschichten, Metalldeckschichten (z.B. Stahl, Aluminium) Holz- und Verbunddeckschichten. Die Herstellung derartiger Behälterwände ist dem Fachmann im Prinzip bekannt.

Das Reaktionsgemisch aus Isocyanatkomponente, Polyolkomponente und weiteren Zusatz- und Hilfsmitteln, Katalysatoren und Treibmitteln für die Herstellung der PIR-Hartschaumstoffe kann vor Ort auf oder zwischen die Wände eines Tanks oder Behälters, insbesondere Biertanks gegossen werden.

Ein besonderer Vorteil der mit den erfindungsgemäßen Hartschaumstoffen hergestellten Behälterwände ist die verbesserte Haftung der Deckschichten, gutes Fließverhalten und exzellentes Flammverhalten.

Die Erfindung soll anhand der nachfolgenden Beispiele näher erläutert werden.

### Beispiele

### Polyolkomponente 1 (erfindungsgemäß):

Aus folgenden Komponenten wurde eine Formulierung hergestellt:

| | |
|---|---|
| 10 Gew.-% | eines Polyetherpolyols mit einer Hydroxylzahl von 530 mg KOH/g, einer Funktionalität-von 3 und einer Viskosität von 11000 mPas bei 25°C, basierend auf Propylenoxid mit Bisphenolamin und Bisphenol A als Starter (Fox-O-Pol^{®} M530 von der Firma Resina Chemie BV), "Polyol 1" |
| 60 Gew.-% | eines Polyesterpolyols mit einer Hydroxylzahl von etwa 240 mg KOH/g und einer Viskosität von etwa 2000 mPas bei 25°C und einer Funktionalität von 2, basierend auf rezykliertem Polyethylenterephthalat (Hoopol^{®} F-1396 von der Firma Synthesia Espanola), "Polyol2" |
| 30 Gew.-% | eines Polyetherpolyols mit einer Hydroxylzahl von 475 mgKOH/g und einer Viskosität von 19000 mPas bei 25°C und einer Funktionalität von 5,5, basierend auf Propylenoxid mit Sorbitol und 1,2-Propylenglykol als Starter (Fox-O-Pol^{®} 475s von der Firma Resina Chemie BV), "Polyol3". |

Auf Basis der Polyolkomponente wurden im Labor PIR-Hartschaumstoffe hergestellt. Dazu wurden der jeweiligen Polyolkomponente Flammschutzmittel, Schaumstabilisatoren, Katalysatoren, Wasser und Treibmittel zugesetzt und die so erhaltene Mischung wurde mit dem Polyisocyanat (ein Gemisch von MDI-Isomeren und deren höheren Homologen mit einem NCO-Gehalt von 31 Gew.-%, Desmodur^{®} 44V40L, Bayer MaterialScience AG) vermischt und ausgegossen. Die Mischung erfolgte mittels einer Mischeinheit im Mitteldruckbereich bei Temperaturen der Komponenten von 35°C. Das Gemisch wurde in eine Form gegossen. Die genauen Rezepturen der Versuche sind in Tabelle 1 wiedergegeben, ebenfalls die Ergebnisse der physikalischen Messungen an den erhaltenen Produkten.

Die Rohdichte wurde an einem 10x10x10 cm³ Würfel durch Ermittlung des Gewichtes errechnet. Die Lambdawerte wurden mit Hilfe der Wärmeflussmethode nach DIN 52616 bei 10°C Mittentemperatur bestimmt (Fox-Gerät). Die Brandeigenschaften wurden gemäß DIN 4102 bestimmt. Die Haftfestigkeit wurde gemäß DIN 53292 bestimmt.

**Tabelle 1:**

| | Bsp. 1 | Bsp. 2 | Bsp.3 3 | Bsp. 4 |
|---|---|---|---|---|
| Polyol 1 [Gew.-Tle.] | 10 | 20 | 30 | 0 |
| Polyol 2 [Gew.-Tle.] | 30 | 20 | 10 | 40 |
| Polyol 3 [Gew.-Tle.] | 60 | 60 | 60 | 60 |
| TCPP [Gew.-Tle.] | 50 | 50 | 50 | 50 |
| Dabco BL 11 [Gew.-Tle.], Katalysator | 0,15 | 0,15 | 0,15 | 0,15 |
| Kosmos 33 [Gew.-Tle.], PIR-Katalysator | 1 | 1 | 1 | 1 |
| Cardura E10P [Gew.-Tle.], Stabilisator | 1 | 1 | 1 | 1 |
| Dabco DC193 [Gew.-Tle.], Schaumstabilisator | 1 | 1 | 1 | 1 |
| Struksilon 8015[Gew.-Tle.], Schaumstabilisator | 1,7 | 1,7 | 1,7 | 1,7 |
| Wasser [Gew.-Tle.] | 0,65 | 0,65 | 0,65 | 0,65 |
| Treibmittel 365/245 [Gew.-Tle.] | 22,2 | 22,2 | 22,2 | 22,2 |
| | 177,7 | 177,7 | 177,7 | 177,7 |
| Viskosität [mPa.s] bei 25°C | 280 | 260 | 240 | 300 |
| Dichte [kg/m³] bei 25°C | 1210 | 1211 | 1212 | 1185 |
| | | | | |
| Isocyanat [Gew.-Tle.] | 180,5 | 180,4 | 180,3 | 184,5 |
| Index | 193 | 193 | 193 | 195 |
| Startzeit [sec] | 10 | 9 | 9 | 11 |
| Gelierungszeit [sec] | 50 | 47 | 40 | 52 |
| Schaumdichte [kg/m³], EN 1602 | 50,4 | 50 | 50 | 50 |
| Druckfestigkeit [kPa], 10% Eindruck, EN 826 | 302 | 310 | 315 | 290 |
| E-Modul [N/mm²] gemäß EN826 | 17,1 | 17,1 | 17,1 | 17,1 |
| Dim.Stabilität [%], 24 Std., -25°C, EN 1604: | | | | |
| Länge | -0,1 | -0,1 | -0,1 | -0,1 |
| Breite | -0,1 | -0,1 | -0,1 | -0,1 |
| Dicke | 0,0 | 0,0 | 0,0 | 0,0 |
| Haftfestigkeit [kPa], DIN53292 | 160 | 150 | 140 | 170 |
| Lambda bei 10°C[W/mK] gemäß DIN 52612 | 0,0218 | 0,0220 | 0,0221 | 0,0217 |
| Flammverhalten [mm], DIN 4102 Teil 1 | 90 | 87 | 85 | 102 |

| | | | | |
|---|---|---|---|---|
| TCPP: Tris(β-chlorisopropyl)phosphat Dabco BL11 : Bis(2-dimethylaminoethyl)ether, 70% in Dipropylenglykol Cardura E10P: C₁₃H₂₄O₃, Glycidylester von gesättigter Monocarbonsäuremischung aus hochverzweigten C₁₀-Isomeren Dabco DC 193 Silikonöl von Air Products Struksilon 8015: Polyethermodifiziertes Dimethylpolysiloxan Treibmittel 365/245 : 60:40 Gemisch aus HFC 365 mfc und HFC 245 fa Kosmos 33 : 30%ige Lösung von Kaliumacetat in Diethylenglykol von Goldschmidt GmbH | | | | |

## Patentansprüche

1. PIR-Hartschaumstoffe erhältlich durch Umsetzung einer organischen Polyisocyanatkomponente mit einer gegenüber Isocyanatgruppen reaktive Wasserstoffatome enthaltenden Polyolkomponente bei einem Index von 100 bis 400 in Gegenwart geeigneter Hilfs- und Zusatzstoffe, Treibmitteln und Wasser sowie Katalysatoren, wobei die Polyolkomponente mindestens ein Polyesterpolyol und ein Polyetherpolyol enthält und wobei das Volumenverhältnis der Polyolkomponente zur organischen Polyisocyanatkomponente 100 zu 100 bis 100 zu 110 beträgt.

2. PIR-Hartschaumstoffe gemäß Anspruch 1, wobei der Index im Bereich von 185 bis 250 liegt.

3. PIR-Hartschaumstoffe gemäß Anspruch 1, wobei als organische Polyisocyanatkomponente ein Gemisch von MDI-Isomeren und deren höheren Homologen mit einem NCO-Gehalt von 28 bis 32 Gew.-%, als Polyolkomponente ein Gemisch aus Polyesterpolyol mit einer OH-Zahl von 220 bis 260 mg KOH/g und einer Viskosität von 1500 bis 2500 mPas bei 25°C und einer Funktionalität von 2 bis 2,5 auf Basis von Polyethylenterephthalat und Polyetherpolyol mit einer OH-Zahl von 450 bis 500 mg KOH/g und einer Funktionalität von 5 bis 6 basierend auf Propylenoxid mit Sorbitol und 1,2-Propylenglykol als Starter bei einem Index von 185 bis 250 in Gegenwart von Wasser und Treibmitteln sowie Katalysatoren eingesetzt werden.

4. Verfahren zur Herstellung von PIR-Hartschaumstoffen nach einem der Ansprüche 1 bis 3 bei denen eine organische Polyisocyanatkomponente mit einer Verbindung mit gegenüber Isocyanatgruppen reaktiven Wasserstoffatomen enthaltenden Polyolkomponente bei einem Index von 100 bis 400 in Gegenwart geeigneter Hilfs- und Zusatzstoffe, Treibmitteln und Wasser sowie Katalysatoren nach dem Gießverfahren verarbeitet wird, wobei die Polyolkomponente mindestens ein Polyesterpolyol und ein Polyetherpolyol enthält und wobei das Volumenverhältnis der Polyolkomponente zur organischen Polyisocyanatkomponente 100 zu 100 bis 100 zu 110 beträgt.

5. Verwendung der Hartschaumstoffe gemäß Anspruch 1 bis 3 zur Isolierung von Behältern, Tanks, insbesondere Biertanks.

6. Biertankwände enthaltend PIR-Hartschaumstoffe gemäß einem der Ansprüche 1 bis 3.
